# EUROPÄISCHE PATENTSCHRIFT

(11) **EP 2 931 567 B1**
(45) Veröffentlichungstag und Bekanntmachung des Hinweises auf die Patenterteilung: **13.05.2020**
(21) Anmeldenummer: 13792346.2
(22) Anmeldetag: 14.11.2013
(51) Int. Cl.: B60R 25/24, G07C 9/00

(54) **SYSTEM ZUM SELEKTIVEN ÖFFNEN EINES FAHRZEUGES DURCH EINEN SERVICEDIENSTLEISTER**
SYSTEM ALLOWING A SERVICE PROVIDER TO SELECTIVELY OPEN A VEHICLE
SYSTÈME POUR L'OUVERTURE SÉLECTIVE D'UN VÉHICULE PAR UN PRESTATAIRE DE SERVICES

(30) Priorität: 14.12.2012 DE 102012223304
(43) Veröffentlichungstag der Anmeldung: 21.10.2015
(73) Patentinhaber: Continental Automotive GmbH, 30165 Hannover (DE)
(72) Erfinder: FOKKELMAN, Joris, 93105 Tegernheim (DE)
(86) Internationale Anmeldenummer: PCT/EP2013/073835
(87) Internationale Veröffentlichungsnummer: WO 2014/090502

(56) Entgegenhaltungen:
- DE-A1-102011 011 697
- JP-A- 2005 226 439

## Beschreibung

Die vorliegende Erfindung betrifft ein System zum selektiven Öffnen eines Fahrzeuges.

Fahrzeuge sind mittlerweile häufig mit sogenannten "keyless entry-Zugangseinheiten" ausgestattet, welche es ermöglichen, das Fahrzeug von außen per Funk zu ent-/verriegeln. Hierzu ist eine im Kraftfahrzeug befindliche Steuereinheit notwendig, welche über Funksignale mit einer externen Einheit, welche zumeist in einem Schlüssel oder in einer Berechtigungskarte für das Fahrzeug integriert ist, kommuniziert. Die im Fahrzeug befindliche Steuereinheit und die externe Einheit, auch externe Identifikationseinheit genannt, welche der Fahrer gewöhnlich bei sich trägt, treten, nachdem beide aktiviert worden sind, in Funkkontakt. Beide Einheiten tauschen dann über Funk Daten aus, welche einen hinterlegten Code enthalten. Stimmt dieser Code zwischen Identifizierungseinheit und Steuereinheit überein, so wird das Fahrzeug durch den berechtigten Fahrer aufgeschlossen bzw. verschlossen.

US 2009/0150306 A1 beschreibt das Vereinbaren eines Termins für Serviceleistungen und die Gewährung von Zugang zu einer Sicherheitsbox mit Schlüssel oder Code zum Fahrzeug. Als Serviceleistungen sind Abhol-/Bringdienst für Waren, Nachfüllen/Wechsel von Betriebsflüssigkeiten des Fahrzeugs, Reparaturen/Austausch von Bauteilen des Fahrzeugs, Reifendruckkontrolle, Batterieladen, Reinigen (außen/innen) beschrieben.

JP 2005-226439 A offenbart eine Zugangsberechtigung für Service-Personal für Reparaturen durch Übertragen eines Schlüsselcodes des RKE-Systems und den Zugang begrenzenden Parametern, wie Zeit, Entfernung, Anzahl der Zugänge auf ein Mobiltelefon des Service-Mitarbeiters, der im Fahrzeug gespeichert und an Mobiltelefon gesendet wird.

DE 102011011697 offenbart ein Schließsystem für ein Fahrzeug mit einer Empfangseinrichtung, die fest in das Fahrzeug integrierbar ist, zum Empfangen von Berechtigungsdaten, einer Bereitstellungseinrichtung zum Bereitstellen der Berechtigungsdaten und einer Steuereinrichtung, die an die Empfangseinrichtung angeschlossen ist, zum Steuern einer Zugangsberechtigung und/oder einer Fahrberechtigung für das Fahrzeug, wobei die Bereitstellungseinrichtung in ein mobiles Kommunikationsgerät oder Datenverarbeitungsgerät integriert ist.

Wenn Wartungsarbeiten am Fahrzeug anstehen, muss der Fahrer sein Fahrzeug bei einer Werkstatt oder Dienstleister abgeben. Für einen gewissen Zeitraum steht sein Fahrzeug ihm nicht mehr zur Verfügung, die Werkstatt wird eventuell ein Ersatzfahrzeug stellen oder der Fahrer sucht sich alternativen Transport. Zur Wartung gehören bekanntlich auch einfache Pflege- und Instandhaltungsarbeiten, wie Tanken, Aufladen, Reinigen, Reifenwechsel, Nachfüllen von sonstigen Betriebsmitteln, wie Öl, Kühlwasser, Adblue, usw., TÜV, Abgasuntersuchung. Diese Arbeiten erfordern die Anwesenheit des Fahrers zur Abgabe und Abholung des Fahrzeugs - was nicht immer mit dem Terminkalender vereinbar ist.

Aufgabe der Erfindung ist es, Servicepersonal am Ort des Fahrzeuges einen speziellen Zugang zu ermöglichen, um Serviceleistungen ohne Beteiligung, aber mit Genehmigung des Fahrzeughalters durchzuführen.

Die Aufgabe wird gelöst durch die Merkmale des erfindungsgemäßen Systems nach Anspruch 1. Erfindungsgemäße Weiterbildungen sind in den abhängigen Ansprüchen 2 bis 6 angegeben.

In einer ersten Ausgestaltung des erfindungsgemäßen Systems, umfasst dieses:
ein erstes Kommunikationsmodul, das konfiguriert ist, um eine Kommunikationsverbindung zu einem Kommunikationsendgerät eines Servicedienstleisters der Berechtigungsdaten ein Kommunikationsnetzwerk aufzubauen;
ein erstes Mittel, das konfiguriert ist, um eine erste Identifikationsroutine auszuführen, die einen Servicedienstleister eindeutig identifiziert;
ein zweites Kommunikationsmodul, das konfiguriert ist, um eine Kommunikationsverbindung über ein drahtloses Kommunikationsnetzwerk zu einer Kommunikationseinrichtung eines Steuergerätes einer Zugangsanordnung des Fahrzeugs aufzubauen;
ein zweites Mittel, das konfiguriert ist, um eine zweite Identifizierungsroutine auszuführen, die das System durch die Zugangsanordnung eindeutig identifiziert;
ein drittes Kommunikationsmodul, das zum Empfangen eines Aktualisierungsanforderungs-Information von einem Fahrer konfiguriert ist; und
ein Aktualisierungsmodul, das konfiguriert ist, um eine Aktualisierungsroutine auszuführen, die Berechtigungsdaten in einem Speicher des Systems aktualisiert,
wobei das zweite Kommunikationsmodul von dem Steuergerät verwendet wird, wenn gültige Berechtigungsdaten verfügbar sind, um über die Kommunikationsverbindung ein profiliertes Steuersignal zu empfangen, das ein selektives Öffnen des Fahrzeugs über die Steuerung veranlasst,
wobei das selektive Öffnen innerhalb eines bestimmten Zeitfensters gültig ist, wobei das Zeitfenster automatisch über die zu erfolgende Servicedienstleistung bestimmt wird.

In einer weiteren Ausgestaltung der erfindungsgemäßen Systems veranlasst das selektive Öffnen das Öffnen der Motorhaube des Fahrzeuges.

Eine weitere vorteilhafte Ausgestaltung des Systems zeichnet sich dadurch aus, dass das selektive Öffnen das Öffnen der Fahrzeugtüren des Fahrzeuges veranlasst.

In einer vorteilhaften Ausgestaltung des erfindungsgemäßen Systems veranlasst das selektive Öffnen das Öffnen der Tankklappe des Fahrzeuges.

Eine weitere Ausgestaltung des Systems zeichnet sich dadurch aus, dass Mittel zum Aufbau einer Kommunikationsverbindung über das drahtlose Kommunikationsnetz über ein Mobilfunkkommunikationsnetz und/oder WLAN-Netz vorgesehen sind.

Eine weitere Ausgestaltung des Systems ist dadurch gekennzeichnet, dass das Mittel für die Verschlüsselung der Kommunikation zwischen der Kommunikationseinrichtung des Systems und der Kommunikationseinrichtung der Zugangsanordnung durch Benutzung eines gemeinsamen Geheimnisses vorgesehen sind.

Die Erfindung bietet vorteilhaft eine zuverlässige und sichere Möglichkeit an, dass der Serviceleister Zugang zum Fahrzeug bekommt, aber eine Diebstahlsicherheit nicht kritisch gefährdet wird.

Erfindungsgemäß wird vorgeschlagen, dass ein Wechselcodeverfahren eingesetzt wird, welches in einem Zeitfenster nur vom Servicedienstleister benutzt werden kann und nach der einmalige Nutzung erlischt. Das Fahrzeug muss von dem Fahrer den Wechselcode bekommen, welcher geprüft vom Servicedienst stammt, wie z. B. durch Eintippen oder vom Handy per gesicherten Kanal übertragen.

Vorteilhaft kann das Fahrzeug auf öffentlichen, Einkaufs- oder Firmenparkplätze stehen gelassen werden. Der Servicedienstleister erhält den Zugangskode vom Fahrer und kann seine Wartung, Reinigung oder andere Serviceleistungen durchführen. Zum Beispiel wird während des Einkaufs das Fahrzeug gereinigt, innen wie außen. Die Werkstatt kann das Fahrzeug vor Ort reparieren oder Winterreifen montieren, wobei diese in der Werkstatt lagern, Valettanking. Batterieprüfung oder -wechsel bei längerem Stehen nach Urlaub oder bei Flotten können so erfolgreich umgesetzt werden. Rückrufaktionen der OEMs, wie SW-Updates, lassen sich einfacher gemäß dem erfindungsgemäßen System durchführen.

Erfindungsgemäß kann das Fahrzeug oder Fahrer oder ein Parkhaus-Verwaltungssystem mitteilen, wann und wo das Fahrzeug geparkt wird, um die Serviceleistung vor Ort durchführen zu können. Ein Öffnen der Schließvorrichtungen ist mit dem speziellen individual ausgehandelten Wechselcode möglich.

Erfindungsgemäß ist es angedacht, dass mittels einer im Fahrzeug befindlichen Kalenderfunktion, die in einem Fahrerassistenzsystem integriert sind, dazu genutzt wird, um die Wartungstermine, die basierend auf Sensorik des Fahrzeuges, Diagnose des Fahrzeuges, Wetterlage oder vom OEM authorisierte Rückruf- oder Wartungsaktion zu vereinbaren, um hierzu autonom Kontakt zur Werkstatt bzw. einen Servicedienstleiter aufzunehmen, wobei eine mögliche Intervention des Fahrers ermöglicht wird.

Erfindungsgemäß ist es weiterhin angedacht, dass der Fahrer oder einer der Passagiere durch ein Signal, wenn diese in das Fahrzeug Einsteigen oder Verlassen auf den erfolgten Service aufmerksam gemacht werden. Die Anzeige erfolgt beispielsweise durch eine Signalsierung über ein Fahrerassistenzsystem, das eine Warnung an den Fahrer bzw. die Passagiere ausgeben kann. Das Signal beinhaltet die Mitteilung, dass ein bestimmter Service am Fahrzeug durchgeführt wurde.

Fahrerassistenzsysteme sind elektronische Zusatzeinrichtungen in Fahrzeugen zur Unterstützung des Fahrers in bestimmten Fahrsituationen. Hierbei stehen oft Sicherheitsaspekte, aber vornämlich die Steigerung des Fahrkomforts im Vordergrund. Diese Systeme greifen teilautonom oder autonom in Antrieb, Steuerung, z. B. Gas, Bremse oder Signalisierungseinrichtungen des Fahrzeuges ein oder warnen durch geeignete Mensch-Maschine-Schnittstellen den Fahrer kurz vor oder während kritischer Situationen. Solche Fahrassistenzsysteme sind beispielsweise Einparkhilfe (Sensorarrays zur Hindernis- und Abstandserkennung), Bremsassistent (BAS), Tempomat, Adaptive Cruise Control oder Abstandsregeltempomat (ACC)), Abstandswarner, Abbiegeassistent, Stauassistent, Spurerkennungssystem, Spurhalteassistent/Spurassistent (Querführungsunterstützung, lane departure warning (LDW)), Spurhalteunterstützung (lane keeping support)), Spurwechselassistent (lane change assistance), Spurwechselunterstützung (lane change support), Intelligent Speed Adaption (ISA), Adaptives Kurvenlicht, Reifendruckkontrollsystem, Fahrerzustandserkennung, Verkehrszeichenerkennung, Platooning, Fahrzeugmatische Notbremsung (ANB), Auf- und Abblendassistent für das Fahrlicht, Nachtsichtsystem (Night Vision).

Eine bevorzugten Ausführungsform des Systems zum selektiven Öffnen eines Fahrzeuges kennzeichnet sich dadurch aus, das dieses System aus einem ersten Kommunikationsmodul zum Aufbau einer Kommunikationsverbindung mit einem Kommunikationsendgerät eines Servicedienstleisters der Berechtigungsdaten über ein Kommunikationsnetz bezieht, aus einer ersten Identifikationsroutine zur eindeutigen Identifikation des Servicedienstleisters, einem zweiten Kommunikationsmodul zum Aufbau einer Kommunikationsverbindung über ein drahtloses Kommunikationsnetz mit einer Kommunikationseinrichtung eines Steuergerätes der Zugangsanordnung eines Fahrzeuges, einer zweiten Identifikationsroutine zur eindeutigen Identifikation des Systems durch die Zugangsanordnung, einem dritten Kommunikationsmodul zum Empfang einer Aktualisierungsanforderungsinformation des Fahrers und einer Aktualisierungsroutine zur Aktualisierung von Berechtigungsdaten in einem Speicher.

In einer vorteilhaften Ausgestaltung des Systems ist das drahtlose Kommunikationsnetz ein Mobilfunkkommunikationsnetz. Bei einer weiteren besonders vorteilhaften Ausgestaltung des Systems sind Mittel zur Identifikation des Benutzers durch Stimmerkennung, durch Übertragung einer Identifikationsinformation -PIN/TAN-, oder durch ein Challenge-Response-Verfahren vorgesehen.

Eine weitere vorteilhafte Ausgestaltung des erfindungsgemäßen Systems zeichnet sich dadurch aus, dass das System nach Durchlaufen der Aktualisierungsroutine zur Aktualisierung von Berechtigungsdaten über ein drahtloses Kommunikationsnetz eine Information über den erfolgten Service und der Art des Services zu der Kommunikationseinrichtung des Steuergerätes der Zugangsanordnung des Fahrzeuges übermittelt wird, wobei das Steuergerät der Zugangsanordnung des Fahrzeuges über ein Bussystem im Fahrzeug an ein Fahrassistenzsystem eine Botschaft über die erfolgte Lieferung erzeugt und das Fahrerassistenzsystem über eine Mensch-Maschine-Schnittstelle eine Warnmeldung über den Service anzeigt.

Eine weitere vorteilhafte Ausgestaltung des erfindungsgemäßen Systems zeichnet sich dadurch aus, dass das Bussystem im Fahrzeug ein CAN-Bus ist.

Eine weitere vorteilhafte Ausgestaltung des erfindungsgemäßen Systems zeichnet sich dadurch aus, dass das Bussystem im Fahrzeug ein Ethernet ist.

Eine weitere Ausgestaltung kennzeichnet sich dadurch aus, dass Mittel zur Identifikation des Servicedienstleisters durch die Verwendung einer eindeutigen kryptographischen Information vorgesehen sind.

Eine besonders vorteilhafte Ausführung des Systems weist Mittel zum Aufbau einer Kommunikationsverbindung über das drahtlose Kommunikationsnetz über ein Mobilfunkkommunikationsnetz und/oder WLAN-Netz auf, welches auch als Fahrzeug-zu-Fahrzeug- oder Fahrzeug-zu-Infrastruktur-Kommunikation aufgeführt sein kann.

Bei einer weiteren sehr sicheren Ausführungsform sind Mittel für die Verschlüsselung der Kommunikation zwischen der Kommunikationseinrichtung des Systems und der Kommunikationseinrichtung der Zugangsanordnung durch Benutzung eines gemeinsamen Geheimnisses vorgesehen.

In einer weiteren Ausgestaltung des erfindungsgemäßen Systems wird eine Registrierung des Fahrzeuges als ein erster Schritt durchgeführt. Anschließend erfolgt eine Ermittlung der Position des Fahrzeuges, danach eine Freigabe einer Position des geparkten Fahrzeuges als Serviceanschrift an das System über eine Kommunikationseinrichtung über ein Kommunikationsnetz. Die Übermittlung der Position des geparkten Fahrzeuges bzw. des abgestellten Fahrzeuges erfolgt über eine Kommunikationseinheit über ein Kommunikationsnetz. Des Weiteren wird eine Übermittlung der Berechtigungsfreigabe zum Öffnen mindestens einer Tür und/oder eines Kofferraums des Fahrzeuges durch einen Servicemitarbeiter über eine Kommunikationseinrichtung des Systems an ein Kommunikationsendgerät des Servicemitarbeiters durchgeführt, wobei das Öffnen innerhalb eines bestimmten Zeitfensters gültig ist. Diese Zeitfenster wird automatisiert über die zu erfolgende Servicedienstleistung bestimmt.

Es wird bei vorliegender Berechtigung der Zugangsanordnung ein Öffnen mindestens einer Tür und/oder eines Kofferraumes und/oder der Motorhaube und/oder des Tankdeckels des Fahrzeuges aktiviert, und nach erfolgtem Öffnen und Durchführen der Servicedienstleistung durch das manuelle Schließen einer Tür und/oder des Kofferraums und/oder Tankdeckels und/oder der Motorhaube des Fahrzeuges durch den Servicedienstleister erfolgt eine Bestätigung der Übermittlung der durchgeführten Dienstleistung durch den Servicedienstleister über die Kommunikationseinrichtung über das Kommunikationsnetz an das Kommunikationsendgerät des Fahrers über das erfindungsgemäße System. Nach einer Übertragung einer Aktualisierungsanforderung durch die Kommunikationseinrichtung des Fahrers wird eine Aktualisierung von Berechtigungsdaten im Steuergerät der Zugangsanordnung vorgenommen.

In einer weiteren vorteilhaften Ausgestaltung kann die Benachrichtigung der Servicedienstleistung dadurch erfolgen, dass das Fahrzeug über die Kommunikationseinrichtung als Datenpaket eine SMS, Email oder eine andere elektronische Mitteilung dem Fahrer über das Kommunikationsnetz auf das Kommunikationsendgerät über die erfolgreiche Servicedienstleistung innerhalb des vorgegebenen Zeitfensters übermittelt wird. Wenn der Fahrer das Fahrzeug öffnet, erhält er über die Zugangsanordnung eine kurze Mitteilung, die akustisch oder visuell auf dem Bildschirm des Kommunikationsendgerätes dargestellt wird, dass eine Servicedienstleistung, wie ein Ölwechsel durchgeführt wurde. Bei der Ausgabe, dass ein Service erfolgt ist, ist es erfindungsgemäß angedacht, dass eine Warnung beim Aussteigen ausgegeben wird, wenn beispielsweise weitere Handlungen vom Fahrer beachtet werden sollten, wie z. B. dass die Muttern der Felgen nach ca. 50 km nachgezogen werden sollten.

Es ist erfindungsgemäß angedacht, dass eine visuelle, akustische, sensorische Dokumentation der Serviceleistung mit einer On-Board-Kamera erfolgt. Diese Art der Dokumentation fungiert auch gleichzeitig als eine Kennungseinheit, die zur Identifikation der erfolgten Servicedienstleistung erfindungsgemäß herangezogen werden kann. Hierzu ist es angedacht, dass, wenn das Fahrzeug geöffnet wird, im Fahrzeug befindliche Kameras, die im Fahrzeug für diese oder andere Zwecke eingebaut sind, Fotos oder Filmaufnahmen durchführen und von der Zugangsanordnung getriggert werden. Es ist auch angedacht, dass Kameras im Kofferraum eingebaut werden. Besonders vorteilhaft ist die Verwendung von Kameras, die wegen Blind-Spot Detektierung, Einparkassistenz, Unterstützung von adaptiven Rückhaltesystemen, Schlafwarnsysteme oder andere Zwecke eingebaut sind und von der Zugangsanordnung angesteuert werden, wenn der Kofferraum, der Tankdeckel, die Motorhaube oder die Türen geöffnet werden. Die Filme oder Fotos können die eventuellen Missbrauchsfälle vermeiden oder aufklären. Sensorwerte von Beschleunigungssensoren oder sogenannte Körperschallsensoren oder Mikrofon-Signale werden ebenfalls zu Dokumentationszwecken der erfolgten Übermittlung der Sendung herangezogen.

In einer weiteren vorteilhaften Ausgestaltung wird die Position mindestens einer freien Abstellfläche basierend auf einer Fahrzeug-zu-Fahrzeug- und/oder einer Fahrzeug-zu-Infrastruktur-Kommunikation ausgehend von der aktuellen Position des Fahrzeugs berechnet und einer Navigationsvorrichtung des Fahrzeugs übermittelt. Hierbei kann die Navigationsvorrichtung die Position über die Kommunikationseinrichtungen an das System übermitteln.

Eine weitere Ausgestaltung des erfindungsgemäßen Systems kennzeichnet sich dadurch aus, dass die Position der freien Abstellfläche der Navigationsvorrichtung dann übermittelt wird, wenn sich das Fahrzeug in einem vorab definierten Bereich in Bezug auf die freie Abstellfläche, vorzugsweise in der Nähe einer Schranke einer Parkeinrichtung, befindet.

Eine sehr vorteilhafte Ausgestaltung ist dadurch gekennzeichnet, dass nach dem Abstellen des Fahrzeugs auf einer ausgewählten freien Abstellfläche die Position der ausgewählten Abstellfläche einem vorzugsweise durch den Fahrer transportierbaren Speichermedium, vorzugsweise einem Schlüssel des Fahrzeugs und/oder einem Mobiltelefon des Fahrers und/oder einer Chipkarte, übermittelt, danach auf dem Speichermedium gespeichert und vorzugsweise zusätzlich angezeigt wird.

Eine vorteilhafte Ausgestaltung zeichnet sich dadurch aus, dass die Navigationsvorrichtung oder das Speichermedium die Position an das System der ausgewählten Abstellfläche über einem Parkplatz-Management-System der Parkeinrichtung überträgt.

In einer weiteren Ausgestaltung wird dem System über das Parkplatz-Management-System der Parkeinrichtung beim Verlassen der ausgewählten Abstellfläche die Position der nun wieder freien Abstellfläche übertragen.

In einer weiteren vorteilhaften Ausgestaltung wird die Position der mindestens einen freien Abstellfläche aus einer Abstandsmessung von mindestens einem Fahrzeug oder mindestens einem Infrastrukturelement zu anderen Fahrzeugen oder zu anderen Infrastrukturelementen berechnet, welche innerhalb eines Umkreises mit einem vorab festgelegten Radius um das eine freie Abstellfläche suchende Fahrzeug angeordnet sind.

Eine vorteilhafte Ausgestaltung ist dadurch gekennzeichnet, dass von dem mindestens einen Infrastrukturelement weitere Informationen zur Abstellflächensituation, vorzugsweise über Anwohnerparkzonen oder Halteverbote, übermittelt und/oder aus einer digitalen Karte der Navigationsvorrichtung bereitgestellt sowie zur Berechnung der Position der mindestens einen freien Abstellfläche herangezogen werden.

In einer weiteren Ausgestaltung wird der Servicedienstleister durch Stimmerkennung, durch Übertragung einer Identifikationsinformation -PIN/TAN-, oder durch ein Challege-Response-Verfahren identifiziert.

Eine weitere Ausgestaltung ist dadurch gekennzeichnet, dass das System durch die Verwendung einer eindeutigen kryptographischen Information identifiziert wird.

In einer weiteren besonders vorteilhaften Ausführung wird die Kommunikationsverbindung über das drahtlose Kommunikationsnetz über ein Mobilfunkkommunikationsnetz und/oder WLAN-Netz aufgebaut.

In einer weiteren vorteilhaften Ausgestaltung wird die Kommunikation zwischen der Kommunikationseinrichtung des Systems und Kommunikationseinrichtung der Zugangsanordnung und der Kommunikationseinrichtung des Servicedienstleister durch Benutzung eines gemeinsamen Geheimnisses verschlüsselt.

Ein Vorteil des erfindungsgemäßen Systems ist es, dass mittels diesen eine Verwaltung von Aufenthaltsorten der aufzufinden Fahrzeuge logistische Synergieeffekte erzeugt werden, da ein hoher Grad an Fahrzeugautomatisierung für die Durchführung von Servicedienstleistungen für die betreffenden Fahrzeugen erfolgt.

Ein weiterer Aspekt der Erfindung ist es, dass eine Kommunikationsverbindung zwischen einem fahrzeugrisierten Servicedienstleister, der die entsprechenden Berechtigungsdaten von dem erfindungsgemäßen System erhält, und der Zugangsvorrichtung des Fahrzeuges aufgebaut wird. Wenn das System oder das mobile Endgerät des Servicedienstleisters erfolgreich identifiziert wurde, werden die Berechtigungsdaten im Steuergerät der Zugangsanordnung für den Übermittlungsvorgang des Servicedienstleisters aktualisiert und entsprechend aktiviert, so dass der Service z. B. im Kofferraum oder in der Fahrgastzelle durch das berechtigte Zulassen des Öffnens der Fahrzeugtüren oder Heckklappe des Kofferraums mittels des Steuergeräts für den Servicedienstleister zugelassen wird. In der Regel befindet er sich im Heckbereich, einige Fahrzeugtypen haben ihn vorne. Als Fahrgastzelle bezeichnet man in der Kraftfahrzeugtechnik den Raum, in dem sich die Fahrzeuginsassen befinden.

Weiterhin kann das System nach seinem Einleiten durch den Fahrer vollautomatisiert, also schnell und ohne Kosten verursachenden Personaleinsatz erfolgen. Auch durch die Nutzung einer bestehenden Mobilfunkinfrastruktur und die Möglichkeit, das weitgehend mit Hilfe handelsüblicher Serverkomponenten zu verwirklichen, werden Kosten reduziert. Außerdem wird durch die Automatisierung das Risiko von Fehleingaben minimiert. Ein weiterer Vorteil der Erfindung ist die Möglichkeit, dass die Aktualisierung der Berechtigungsdaten direkt über ein mobiles Endgerät des Fahrers und des Servicedienstleister erfolgen kann.

Das erfindungsgemäße Fahrzeug bietet eine zuverlässige und sichere Möglichkeit, dass ein Servicedienstleister z. B. den Kofferraum öffnen kann, aber hierdurch eine Diebstahlsicherheit nicht kritisch gefährdet wird. Es kann ein Wechselcodeverfahren eingesetzt werden, was nur in einem Zeitfenster nur vom Servicedienstleister einmalig benutzt werden kann und nach einmaliger Nutzung erlischt.

Das Fahrzeug oder der Fahrer melden sich über Kommunikationsverbindungen in einer mit dem erfindungsgemäßen System verbundenen Infrastruktureinheit, wie z. B. Parkhaus-Verwaltungssystem, an, wobei bei dieser Meldung dem erfindungsgemäßen System mitgeteilt wird, wann und wo das Fahrzeug geparkt wird, um eine Sendung über einen Servicedienstleister entgegen nehmen zu können. Hierbei wird vorteilhaft durch die Infrastruktur und den so entstandenen Informationsdienst dafür gesorgt, dass die Lieferungen durch optimierte Bündelung von Sendungen optimiert vom Lieferdienst übermittelt werden können.

Durch die Übermittlung der Berechtigung, das betreffende Fahrzeug zu öffnen, ist es auch angedacht, dass bei Übertragung der Berechtigung vom mobilen Endgerät des Servicedienstleisters oder dem damit vernetzten Servicefahrzeug auf das vom Servicedienstleister erzeugte Funksignal alle Fahrzeuge in der Nähe mit einem Lichtsignal reagieren, die eine Servicedienstleistung erwarten. Hierdurch wird das Auffinden durch den Servicedienstleister erleichtert, um die betroffenen Fahrzeuge schnell zu finden, wobei, wie bereits erwähnt, das Öffnen des Kofferraums oder der Türen nur mit dem speziellen individual Wechselcode möglich ist.

Weitere vorteilhafte Weiterbildungen des erfindungsgemäßen Verfahrens sowie des Systems zur Übermittlung von Sendungen sind den weiteren Ansprüchen zu entnehmen.

Im Folgenden wird das erfindungsgemäße System näher erläutert.

Ein Fahrzeug, beispielsweise ein Fahrzeug, LKW, welches auf einer Abstellfläche geparkt werden soll, ist mit einem Positionierungssystem, beispielsweise einem GPS-System, welches eine Rechenvorrichtung und eine Navigationsvorrichtung beinhaltet, ausgerüstet. Hierzu wird ein Aktualisieren von Berechtigungsdaten einer Zugangsanordnung eines Fahrzeugs und ein Kommunikationsendgerät des Servicedienstleisters durchgeführt. Das System kann eine Server-basierte Lösung sein, die über die üblichen Komponenten und Peripherie wie Prozessor, Speicher, Netzwerkanbindung, Betriebssystem, Applikationssoftware etc. verfügen. Daneben sind ein erstes Kommunikationsnetz und ein zweites Kommunikationsnetz vorgesehen.

Bei dem Kommunikationsendgerät des Servicedienstleisters handelt es sich beispielsweise um ein Mobilfunkendgerät, ein multifunktionales Smartphone, eine Chipkarte oder ein ähnliches funkkommunikationsfähiges Endgerät mit einem Speicher, das mindestens eine Kommunikationseinrichtung aufweist. Das System verfügt über eine Kommunikationseinrichtung, über die das System sowohl mit dem Kommunikationsnetz, als auch mit dem Kommunikationsnetz kommunizieren kann. Außerdem ist in das System die Kommunikationseinrichtung über einen Datenbus mit einem Datenmodul unter Verwendung einschlägiger Kommunikationsprotokolle verbunden. Von diesem Datenmodul oder einer anderen kompetenten Einrichtung wurden die Berechtigungsdaten ursprünglich vergeben bzw. verwaltet. Die Berechtigungsdaten umfassen auch die profilierten Berechtigungsdaten. Das Kommunikationsendgerät des Fahrers ist ebenfalls mit dem Kommunikationsnetz beispielsweise drahtlos verbunden.

Das Fahrzeug verfügt über eine Zugangsanordnung. Diese Zugangsanordnung verfügt über ein Steuergerät. Dieses Steuergerät ist über eine Kommunikationseinrichtung mit dem Kommunikationsnetz verbunden. Ebenfalls im Steuergerät sind in einem Speicher die Berechtigungsdaten von autorisierten Servicedienstleistern der Zugangsanordnung gespeichert.

Außerdem dargestellt ist das mobile Endgerät bzw. Kommunikationsendgerät des Servicedienstleisters, das über eine Kommunikationseinrichtung verfügt. Mittels dieses mobilen Endgerätes ist es möglich, über dessen Kommunikationseinrichtung ein codiertes und verschlüsseltes Funksignal an eine Kommunikationseinrichtung des Steuergerätes der Zugangsanordnung zu übertragen.

Als Funksignal wird ein Kommunikationssignal verstanden, was auf elektromagnetischen Signalen, inklusive optischer Signale (z. B. Infrarotlicht), basiert. Das Fahrzeug reagiert auf ein bestimmtes verschlüsseltes Funksignal des Kommunikationsendgerätes des Servicedienstleisters, das vorzugsweise auf einem bestimmten Zeitfenster begrenzt ist und nach Benutzung der Öffnungskommandos entwertet wird. Das Funksignal gibt eine Zugangsberechtigung, aber keine Fahrberechtigung, um das Fahrzeug zu starten. Eine nicht eingezeichnete aktive Alarmanlage wird erfindungsgemäß für den Zeitraum der berechtigten Dauer der Servicedienstleistung am Fahrzeug in der Art modifiziert, dass eine Alarmauslösung nicht erfolgt.

Mithilfe des Funksignals können verschiedene Funktionen der Zugangsanordnung ausgelöst werden. Dies kann beispielsweise das Öffnen oder Schließen der Türverriegelung oder der Kofferraumverriegelung oder der Motorhaube oder des Tankdeckels sein. Dabei werden dem Kommunikationsendgerät des Servicedienstleisters bestimmte Informationen und dem Steuergerät beispielsweise von dem Datenmodul des Systems bestimmte Benutzerdaten zugeordnet und gespeichert. Diese ermöglichen nur mit einem bestimmten Kommunikationsendgerät des Servicedienstleister die Zugangsanordnung eines bestimmten Fahrzeugs zu bedienen. Der Speicher und die Kommunikationseinrichtungen und sind über einen Datenbus unter Verwendung von einschlägigen Kommunikationsprotokollen miteinander verbunden.

Im Funksignal werden Datenpakete übertragen, die als ein erstes Datenelement eine Fahrzeugidentifikation, die Fahrzeugfarbe, Fahrzeugtyp, Fahrzeugkennzeichen, einen digitalen Identifikationscode, eine Rufnummer umfassen kann, als zweites Datenelement, die Fahrzeugposition oder eine URL zu einem Dienst, wie einem IP-basiertem Parkplatzmanagement-System, wo die Fahrzeugposition abgefragt werden kann, umfassen kann, als drittes Datenelement einen Zugangscode, welcher einen profilierten Zugang für den Servicedienstleister ermöglicht und eine Fahrberechtigung gibt und der nach einer bestimmten Zeit seine Gültigkeit verliert. Alternativ werden weitere Datenfelder belegt, wie "Suchcode", "Genehmigung zur Tür, Motorhaube, Kofferraum, Tankdeckel-Öffnung". Des Weiteren befinden sich in dem Datenpaket Elemente, die auf die Eigenschaft der erfolgten Service schließen lassen.

Das Kommunikationsendgerät des Fahrers, das ebenfalls ein Handy, Smartphone, ein Multifunktions-Fahrzeugschlüssel oder eine Chipkarte ist, enthält oder bekommt vom Fahrzeug über das System eine bestimmte Zahl von Zugangscodes.

Bei dieser Variante der Vergabe der Berechtigung muss das Fahrzeug nicht notwendigerweise mit der Umgebung direkt vernetzt werden. Die im Kommunikationsendgerät des Fahrers vorbereiteten Zugangscodes bekommen die Gültigkeit beim Aussteigen, in dem der Zeitraum der Aussteigezeitpunkt + X-Stunden bestimmt werden, wobei X-Stunden die Zeitdauer des Aufenthalt auf dem Parkplatz für die Dauer des Services ist.

Nach erfolgter eindeutiger Identifikation des autorisierten Servicedienstleisters werden die Berechtigungsdaten daraufhin von der Kommunikationseinrichtung des Systems über das Kommunikationsnetz eine Kommunikationsverbindung zur Kommunikationseinrichtung des Steuergerätes der Zugangsanordnung herstellen.

Nunmehr wird das Kommunikationsendgerät des Servicedienstleisters von dem Steuergerät der Zugangsanordnung eindeutig identifiziert. Dies kann beispielsweise durch die Verwendung eines eindeutigen kryptographischen Schlüssels erfolgen. Es ist dabei nicht notwendig, dass dieser Schritt zeitlich unmittelbar nach der Identifikation des Servicedienstleisters und der Festlegung der Anforderungsaktualisierung geschieht.

Eine Möglichkeit der Identifizierung bzw. Authentisierung des Kommunikationsendgeräts des Servicedienstleisters durch das Steuergerät der Zugangsanordnung ist beispielsweise ein Challenge-/Response-Verfahren. Hierbei wird vorausgesetzt, dass das Steuergerät der Zugangsanordnung und das Kommunikationsendgerät des Servicedienstleisters ein gemeinsames kryptographisches Geheimnis besitzen. Dieses Geheimnis wird zweckmäßigerweise bei der ersten Anmeldung/Registrierung des Fahrers bei dem System 40 erzeugt, entweder vom Steuergerät der Zugangsanordnung 60 oder von dem System. Das Geheimnis wird dann im Speicher 90 im Steuergerät 120 sowie einem Speicher 90 in dem System gespeichert. Nach Aufnahme der Kommunikation zwischen dem Kommunikationsendgerät des Servicedienstleisters und dem Steuergerät über das Kommunikationsnetz wird das Steuergerät eine Anfrage -Challenge- an das System und das Kommunikationsendgerät des Servicedienstleisters senden, aus der das System und das Kommunikationsendgerät des Servicedienstleisters mit Hilfe des kryptographischen Geheimnisses die Antwort -Response- berechnet und über das Kommunikationsnetz zurück an das Steuergerät der Zugangsanordnung sendet. Dieses Verfahren hat darüber hinaus den Vorteil, dass auch die folgende weitere Kommunikation zwischen dem System, Kommunikationsendgerät des Servicedienstleisters und dem Steuergerät über das Kommunikationsnetz zur Übertragung der Aktualisierungsanforderung unter Benutzung des gemeinsamen Geheimnisses verschlüsselt ablaufen kann und daher nicht vorausgesetzt werden muss, dass die über das Kommunikationsnetz ablaufenden Protokolle per se eine ausreichende Datensicherheit bieten.

Das einfachere Verfahren zur Identifizierung bzw. Authentisierung des Systems durch das Steuergerät der Zugangsanordnung ist die Verwendung eines PIN-Codes gegebenenfalls zusammen mit einem einmalig verwendbaren TAN-Code. Diese Codes, also PIN und gegebenenfalls eine ausreichende Menge an TAN-Codes, werden zweckmäßigerweise bei der ersten Anmeldung/ Registrierung des Fahrers bei dem System erzeugt, entweder vom Steuergerät der Zugangsanordnung oder von dem System, und im Speicher des Steuergeräts sowie in dem System gespeichert. Hierbei findet die Kommunikation unverschlüsselt statt, und es wird vorausgesetzt, dass die über das Kommunikationsnetz ablaufenden Protokolle eine ausreichende Datensicherheit bieten.

Alternativ kann zwischen dem Kommunikationsendgerät des Fahrers und dem Kommunikationsendgerät des Servicedienstleister das Funksignal derart aufgeteilt werden, dass die übertragenen Datenpakete zwischen Fahrer und Lieferant in der Zugangsanordnung, so dass das Datenpaket teilweise vom Fahrer Handy oder Email oder vergleichbare Technologie übermittelt wird, teilweise beim Servicedienstleister hinterlegt wird und die zwei Teilpakete nur zusammen einen Zugangscode bzw. Berechtigungsdaten ergeben. Dieses Verfahren verhindert vorteilhaft, dass ein Zugangscode bei der Übertragung abgehört und das Fahrzeug unberechtigt geöffnet wird.

Bei einer Variante dieses Verfahrens werden von dem System selbst keine Identifikationsdaten gespeichert. Vielmehr übermittelt das System nach Aufbau der Kommunikation zwischen System und Steuergerät die Identifikationsdaten des Servicedienstleister an das Steuergerät.

In diesem Fall werden die Identifikationsdaten (z. B. PIN-Code bzw. TAN-Codes) auf der einen Seite im Speicher des Steuergeräts gespeichert. Auf der anderen Seite sind sie dem Servicedienstleister bekannt oder beispielsweise in einem Speicher in seinem Kommunikationsendgerät abgespeichert.

Nach erfolgter eindeutiger Identifikation des Systems gegenüber dem Steuergerät wird die Aktualisierungsanforderung des Fahrers von der Kommunikationseinrichtung des Systems über das Kommunikationsnetz an die Kommunikationseinrichtung des Steuergerätes übertragen. Es wird dann eine Aktualisierung der Berechtigungsdaten im Speicher des Steuergeräts der Zugangsanordnung entsprechend der Aktualisierungsanforderung vorgenommen.

In einem weiteren Beispiel wird erläutert, wie die Positionsbestimmung zur Angabe als Serviceort im Innenstadtbereich von Großstädten erfolgen kann.

Es parken am Straßenrand viele Fahrzeuge, welche einen gleichen Aufbau besitzen und die vorab beschriebene Funktionalität aufweisen.

Zur Realisierung des erfindungsgemäßen Systems ist es von Vorteil, wenn die Fahrzeuge Abstandssensoren aufweisen, welche vorn, hinten oder seitlich an den beteiligten Fahrzeugen montiert sind, wie beispielsweise Ultraschall-, Infrarot-, Radar-Sensoren, Kamera, etc.. Mittels der Recheneinheit können die Fahrzeuge ferner eine Fahrzeug-zu-Fahrzeug-Kommunikation und/oder Fahrzeug-zu-Infrastruktur-Kommunikation über die Kommunikationseinrichtungen durchführen. Ferner ist eine Navigationsvorrichtung vorhanden.

Während der Suche nach einem Parkplatz nimmt der Fahrer des suchenden Fahrzeugs zunächst über eine Taste oder ein Kommando eine Verbindung mit Fahrzeugen in einem Umkreis mit einem vorab definierten Radius um das Fahrzeug auf. Hierdurch werden die bereits parkenden Fahrzeuge in dem Umkreis aus einem sogenannten Sleep-Modus (inaktiver Zustand) "geweckt" und in den aktiven Zustand versetzt. Die sich nun im aktiven Zustand befindenden Fahrzeuge vermessen dann ihre Abstände zum jeweils nächsten Fahrzeug oder zur nächsten Infrastruktureinrichtung, beispielsweise einer Ampel oder einem Verkehrsschild, nach vorn, hinten und/oder zu den Seiten.

Mittels Fahrzeug-zu-Fahrzeug-Kommunikation werden die ermittelten Abstandsdaten von den Fahrzeugen des Umkreises an die Rechenvorrichtung des eine Abstellfläche suchenden Fahrzeugs übermittelt. Ferner werden die Positionen der jeweiligen Fahrzeuge an die Rechenvorrichtung dieses Fahrzeugs übertragen. Die Rechenvorrichtung des GPS-Systems kann nun aus den über C2C-Kommunikation übertragenen Informationen die jeweils zur Verfügung stehende Fläche zum Parken feststellen. Ist diese ausreichend groß, so wird der entsprechende freie Raum als Abstellfläche ausgewiesen und dem Fahrer als zum Parken zur Verfügung stehende Abstellfläche angezeigt. Nachdem das Fahrzeug 10 den Parkplatz eingenommen hat wird über die Kommunikationseinrichtung diese Position aus dem GPS-System an das System übermittelt.

Die Navigationsvorrichtung kann aus den von der Rechenvorrichtung ermittelten Daten die Route von der aktuellen Position des eine Abstellfläche suchenden Fahrzeugs zur freien Abstellfläche berechnen und dem Fahrer zum schnellen Auffinden der Parklücke zur Verfügung stellen. Existieren mehrere freie Abstellflächen im Umkreis des Fahrzeugs, können diese auf einer Anzeige der Rechenvorrichtung dargestellt werden, so dass sich der Fahrer eine für ihn passende Abstellfläche auswählen kann.

Erfindungsgemäß ist es möglich, dass der autorisierte Servicedienstleistern die Berechtigungsdaten der Zugangsanordnung auch ohne die Zuhilfenahme einer Servicezentrale aktualisieren kann. Hierzu wird zunächst vom Mobilfunkendgerät des autorisierten Servicedienstleisters eine Verbindung über das Mobilfunkkommunikationsnetz zur Kommunikationseinrichtung der Zugangsanordnung aufgebaut. Es erfolgt dann eine eindeutige Identifikation des autorisierten Servicedienstleisters. Dies kann auf verschiedene Weise erfolgen. Erfindungsgemäß kann das Steuergerät einen Autorisierungscode erzeugen und über die Kommunikationseinrichtung beispielsweise als Kurznachricht - SMS - an das Mobilfunkendgerät des autorsierten Servicedienstleisters senden. Dieser Autorisierungscode wird im Mobilfunkendgerät in einem Speicher oder auf dessen SIM-Karte gespeichert. Im Fall einer gewünschten Aktualisierung der Benutzerdaten, muss dieser Fahrzeugrisierungscode an die Kommunikationseinrichtung zurückgesendet werden. Erfindungsgemäß kann dann eine zweiteilige Identifikation erfolgen. Dazu wird zunächst geprüft, ob der Autorisierungscode von einem bekannten Mobilfunkendgerät bzw. dessen SIM-Karte gesendet wurde. Ist dies der Fall, so wird in einem zweiten Schritt der vom Mobilfunkgerät gesendete Autorisierungscode dann vom Steuergerät der Zugangsanordnung überprüft. Verläuft diese Überprüfung positiv, so werden die Berechtigungsdaten im Steuergerät entsprechend der Anforderung aktualisiert, z. B. gelöscht.

Dieses Verfahren zur Identifikation des Servicedienstleisters kann auch noch weiter abgesichert werden, indem die Kommunikationseinrichtung des Steuergerätes nach Erhalt des Fahrzeugrisierungscodes eine Anfrage beispielsweise als Kurznachricht -SMS- an eine zuvor im Steuergerät oder in der Kommunikationseinrichtung des Steuergerätes abgespeicherte Adresse (Telefonnummer) eines Mobilfunkgeräts sendet, die dann innerhalb eines Zeitfensters bestätigt werden muss, z. B. wiederum durch eine Kurznachricht mit einem Fahrzeugrisierungscode an die Kommunikationseinrichtung des Steuergerätes. An dieser Stelle folgt auch die Übertragung der Informationen, um welche Art von Servicedienstleistern es sich handelt. Durch die Identifikation kann auch die Art der Servicedienstleistung angegeben werden.

Ein weiteres mögliches Identifikationsverfahren ist die Verwendung eines oben im Detail beschriebenen Challenge-/Response-Verfahrens, wobei zuvor ein gemeinsames Geheimnis zwischen dem Steuergerät der Zugangsanordnung und dem Mobilfunkendgerät des Servicedienstleisters bzw. dessen SIM-Karte ausgetauscht wird. Hierbei muss sich das Mobilfunkendgerät des Servicedienstleisters gegenüber der Zugangsanordnung authentifizieren.

Vorteilhaft ist der Einsatz der oben beschriebenen Verfahren nicht nur zur Löschung von Benutzerdaten im Speicher, sondern auch zur Reaktivierung von Benutzerdaten.

Erfindungsgemäß kann das beschriebene System, auch auf RKE-Schlüssel -remote keyless entry- oder auch Wegfahrsperren angepasst werden.

## Patentansprüche

1. System zum selektiven Öffnen eines Fahrzeuges umfassend, ein erstes Kommunikationsmodul,
das konfiguriert ist, um eine Kommunikationsverbindung zu einem Kommunikationsendgerät eines Servicedienstleisters der Berechtigungsdaten ein Kommunikationsnetzwerk aufzubauen;
ein erstes Mittel, das konfiguriert ist, um eine erste Identifikationsroutine auszuführen, die einen Servicedienstleister eindeutig identifiziert;
ein zweites Kommunikationsmodul,
das konfiguriert ist, um eine Kommunikationsverbindung über ein drahtloses Kommunikationsnetzwerk zu einer Kommunikationseinrichtung eines Steuergerätes einer Zugangsanordnung des Fahrzeugs aufzubauen;
ein zweites Mittel, das konfiguriert ist, um eine zweite Identifizierungsroutine auszuführen, die das System durch die Zugangsanordnung eindeutig identifiziert;
ein drittes Kommunikationsmodul,
das zum Empfangen eines Aktualisierungsanforderungs-Information von einem Fahrer konfiguriert ist; und
ein Aktualisierungsmodul, das konfiguriert ist, um eine Aktualisierungsroutine auszuführen, die Berechtigungsdaten in einem Speicher des Systems aktualisiert,
wobei das zweite Kommunikationsmodul von dem Steuergerät verwendet wird, wenn gültige Berechtigungsdaten verfügbar sind, um über die Kommunikationsverbindung ein profiliertes Steuersignal zu empfangen, das ein selektives Öffnen des Fahrzeugs über die Steuerung veranlasst,
wobei das selektive Öffnen innerhalb eines bestimmten Zeitfensters gültig ist, wobei das Zeitfenster automatisch über die zu erfolgende Servicedienstleistung bestimmt wird.

2. System nach Anspruch 1, **dadurch gekennzeichnet, dass** das selektive Öffnen der Motorhaube durch das Fahrzeug veranlasst wird.

3. System nach Anspruch 1 oder 2, **dadurch gekennzeichnet, dass** das selektive Öffnen der Fahrzeugtüren durch das Fahrzeug veranlasst wird.

4. System nach einem der vorangegangen Ansprüche 1 bis 3, **dadurch gekennzeichnet, dass** das selektive Öffnen der Tancklappe durch das Fahrzeug veranlasst wird.

5. System nach einem der Ansprüche 1 bis 4, **dadurch gekennzeichnet, dass** Mittel zum Aufbau einer Kommunikationsverbindung über das drahtlose Kommunikationsnetz über ein Mobilfunkkommunikationsnetz und/oder WLAN-Netz vorgesehen sind.

6. System nach einem der Ansprüche 1 bis 5, **dadurch gekennzeichnet, dass** Mittel für die Verschlüsselung der Kommunikation zwischen der Kommunikationseinrichtung des Systems und der Kommunikationseinrichtung der Zugangsanordnung durch Benutzung eines gemeinsamen Geheimnisses vorgesehen sind.

## Claims

1. System for selectively opening a vehicle comprising,
a first communication module, which is configured to set up a communication link to a communication terminal of a service provider of authorization data via a communication network;
a first means, which is configured to execute a first identification routine that uniquely identifies a service provider;
a second communication module,
which is configured to set up a communication link via a wireless communication network to a communication device of a controller of an access arrangement of the vehicle;
a second means, which is configured to execute a second identification routine that uniquely identifies the system by the access arrangement;
a third communication module, which is configured to receive an item of update request information from a driver; and
an update module, which is configured to execute an update routine that updates authorization data in a memory of the system,
wherein the second communication module is used by the controller, when valid authorization data are available, to receive via the communication link a profiled control signal that initiates selective opening of the vehicle via the controller,
wherein the selective opening is valid within a specific time window, wherein the time window is automatically determined via the service to be provided.

2. System according to Claim 1, **characterized in that** the selective opening of the engine cover is initiated by the vehicle.

3. System according to Claim 1 or 2, **characterized in that** the selective opening of the vehicle doors is initiated by the vehicle.

4. System according to one of the preceding Claims 1 to 3, **characterized in that** the selective opening of the fuel flap is initiated by the vehicle.

5. System according to one of Claims 1 to 4, **characterized in that** means for setting up a communication link via the wireless communication network is provided via a mobile radio communication network and/or WLAN network.

6. System according to one of Claims 1 to 5, **characterized in that** means for encrypting the communication between the communication device of the system and the communication device of the access arrangement by using a shared secret are provided.

## Revendications

1. Système d'ouverture sélective d'un véhicule, ledit système comprenant
un premier module de communication qui est conçu pour établir par le biais d'un réseau de communication une liaison de communication avec un terminal de communication d'un prestataire de services de données d'autorisation ;
un premier moyen conçu pour exécuter un premier sous-programme d'identification qui identifie de manière univoque un prestataire de services ;
un deuxième module de communication qui est conçu pour établir une liaison de communication par le biais d'un réseau de communication sans fil avec un dispositif de communication d'une unité de commande d'un ensemble d'accès du véhicule ;
un deuxième moyen conçu pour exécuter un deuxième sous-programme d'identification qui identifie de façon univoque le système par le biais de l'ensemble d'accès ;
un troisième module de communication qui est conçu pour recevoir d'un conducteur une information de demande d'actualisation ; et
un module d'actualisation qui est conçu pour exécuter un sous-programme d'actualisation qui actualise les données d'autorisation situées dans une mémoire du système,
le deuxième module de communication étant utilisé par l'unité de commande lorsque des données d'autorisation valides sont disponibles pour recevoir par le biais de la liaison de communication un signal de commande profilé qui provoque l'ouverture sélective du véhicule par le biais de la commande, l'ouverture sélective étant valide à l'intérieur d'une fenêtre temporelle déterminée, la fenêtre temporelle étant déterminée automatiquement par le service à effectuer.

2. Système selon la revendication 1, **caractérisé en ce que** l'ouverture sélective du capot de moteur est déclenchée par le véhicule.

3. Système selon la revendication 1 ou 2, **caractérisé en ce que** l'ouverture sélective des portes du véhicule est déclenchée par le véhicule.

4. Système selon l'une des revendications 1 à 3 précédentes, **caractérisé en ce que** l'ouverture sélective de la trappe de réservoir est déclenchée par le véhicule.

5. Système selon l'une des revendications 1 à 4, **caractérisé en ce que** des moyens sont prévus pour établir une liaison de communication par le biais du réseau de communication sans fil via un réseau de radiocommunication mobile et/ou un réseau WLAN.

6. Système selon l'une des revendications 1 à 5, **caractérisé en ce que** des moyens sont prévus pour crypter la communication entre le dispositif de communication du système et le dispositif de communication de l'ensemble d'accès à l'aide d'un secret commun.
